# EUROPEAN PATENT APPLICATION

(11) **EP 4 155 951 A1**
(43) Date of publication of application: **29.03.2023**
(21) Application number: 20936451.2
(22) Date of filing: 19.05.2020
(51) Int. Cl.: G06F 13/00

(54) **APPARATUS, NETWORK APPARATUS, AND COMMAND EXECUTION METHOD**

(71) Applicant: MITSUBISHI ELECTRIC CORPORATION, Chiyoda-ku Tokyo 100-8310 (JP)
(72) Inventor: ENDO Hiroaki, Tokyo 100-8310 (JP)
(74) Representative: Studio Torta S.p.A.
(86) International application number: PCT/JP2020/019794
(87) International publication number: WO 2021/234820

(57) **Abstract**

An apparatus (2) includes a function-authentication information decoder (201) and a command executer (202). The function-authentication information decoder (201) decodes function-authentication information received from a communication adaptor connected via a serial interface, the function-authentication information being information encrypted before being retained by the communication adaptor. The command executer (202) (i) determines, upon receiving a command from the communication adaptor, based on the function-authentication information decoded by the function-authentication information decoder (201), whether a function corresponding to the command is permitted, and (ii) executes processing according to the command only when the function is permitted.

## Description

### Technical Field

The present disclosure relates to an apparatus, a network apparatus, and a command execution method.

### Background Art

In recent years, there is an increase in Internet-connectable home appliances called Internet of Things (IoT) home appliances, information home appliances, Internet home appliances, smart home appliances, or the like.

However, many users actually use the aforementioned appliances without connecting to any network. For this reason, from the viewpoint of cost reduction, manufacturers often manufacture and sell a home appliance of specifications with the installment of an inexpensive serial-communication interface such as a UART without the inclusion of a communication function in the home appliance itself.

In the above case, a user who wants to connect the home appliance to a network separately purchases a communication adaptor having a network connection function and connects to the home appliance via the aforementioned interface. This enables connecting the home appliance to a network such as the Internet via the communication adaptor (for example, refer to Patent Literature 1).

### Citation List

### Patent Literature

Unexamined Japanese Patent Application Publication No. 2005-184487

### Summary of Invention

### Technical Problem

Due to benefits such as expanded sales of a home appliance, home appliance manufacturers often permit a third party to manufacture and sell such a communication adaptor as described above. In such case, the home appliance manufacturers disclose, to the third party, information of a format of a frame communicated between the communication adaptor and the home appliance, information of command specifications, and the like. The home appliance manufacturers, to make a distinction from a genuine communication adaptor manufactured thereby, often disclose to the third party a minimum necessary amount of information.

However, a possibility heretofore exists that a third party to which information is disclosed infers undisclosed information, and thus a concern heretofore exists that a communication adaptor of the third party may end up executing a function that is unauthorized by the manufacturer with respect to the home appliance. For this reason, proposals are desired of a new technique for preventing unauthorized use of an apparatus by communication adaptors of third parties.

The present disclosure is made in view of the aforementioned circumstances, and an objective of the present disclosure is to prevent unauthorized use of an apparatus by a communication adaptor.

### Solution to Problem

To achieve the aforementioned objective, an apparatus according to the present disclosure includes decoding means for decoding function-authentication information received from a communication adaptor connected via a serial interface, the function-authentication information being information encrypted before being retained by the communication adaptor, storage means for storing the decoded function-authentication information, and command execution means for (i) upon receiving a command from the communication adaptor, determining, based on the function-authentication information stored in the storage means, whether a function corresponding to the command is permitted, and (ii) executing processing according to the command only when the function is permitted.

### Advantageous Effects of Invention

The present disclosure enables preventing unauthorized use of an apparatus by a communication adaptor.

### Brief Description of Drawings

FIG. 1 is a block diagram illustrating configuration of an apparatus control system according to Embodiment 1;
FIG. 2 is a block diagram illustrating hardware configuration of an apparatus and a communication adaptor according to Embodiment 1;
FIG. 3 illustrates functional configuration of the communication adaptor according to Embodiment 1;
FIG. 4 illustrates functions executable by a genuine communication adaptor in Embodiment 1;
FIG. 5 illustrates functions executable by a communication adaptor of a third party in Embodiment 1;
FIG. 6 illustrates an example of data into which content illustrated in FIG. 5 is converted;
FIG. 7 illustrates functions executable by the communication adaptor of the third party in Embodiment 1;
FIG. 8 illustrates an example of data into which content illustrated in FIG. 7 is converted;
FIG. 9 illustrates functional configuration of the apparatus according to Embodiment 1;
FIG. 10 is a flowchart illustrating a process for command execution processing executed by the apparatus according to Embodiment 1;
FIG. 11 is a block diagram illustrating configuration of an apparatus control system according to Embodiment 2;
FIG. 12 is a block diagram illustrating hardware configuration of a terminal device according to Embodiment 2;
FIG. 13 illustrates functional configuration of the terminal device according to Embodiment 2; and
FIG. 14 illustrates functional configuration of a communication adaptor according to Embodiment 2.

### Description of Embodiments

Hereinafter, embodiments of the present disclosure are described in detail with reference to the drawings.

### Embodiment 1

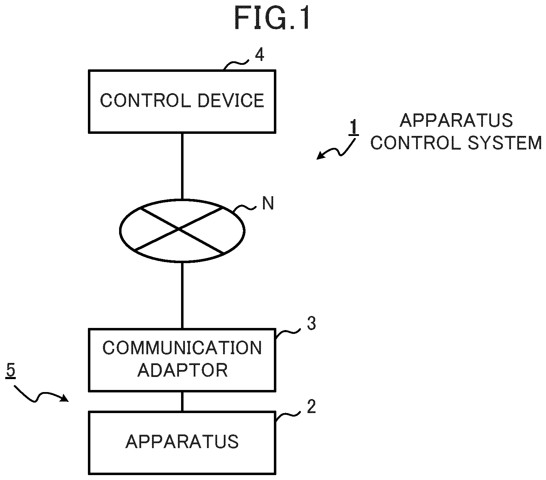

FIG. 1 illustrates overall configuration of an apparatus control system 1 according to Embodiment 1. The apparatus control system 1 is, for example, a system for controlling an apparatus 2 arranged in a housing such as a detached house, an apartment house, or the like and includes the apparatus 2, a communication adaptor 3, and a control device 4. The apparatus 2 and the communication adaptor 3 are included in a network apparatus 5.

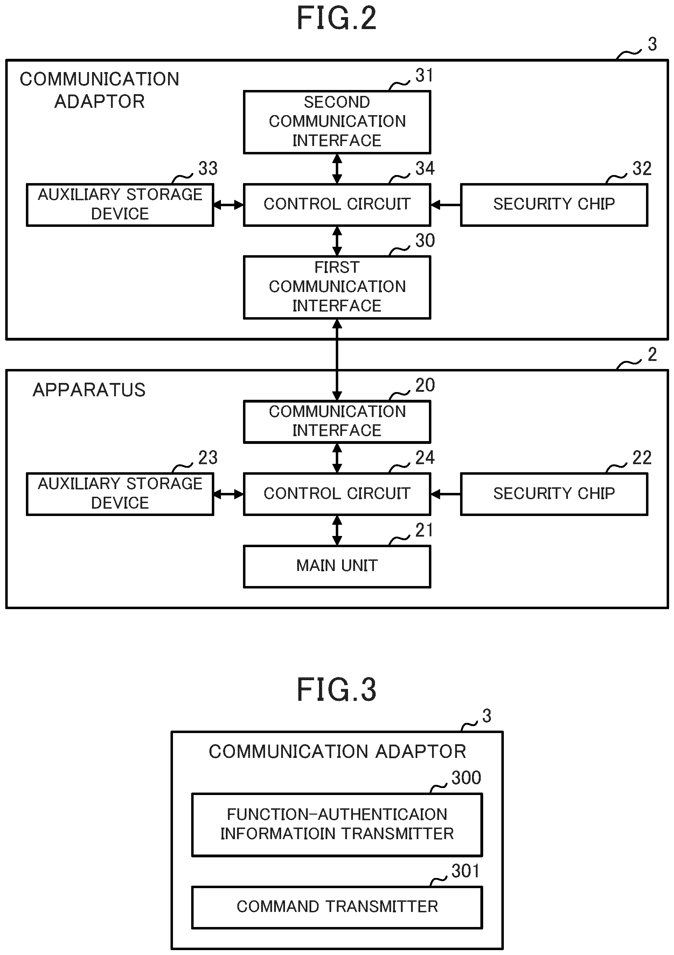

The apparatus 2 is, for example, a home appliance such as an air conditioner, lightning equipment, a television, a refrigerator, an induction heating (IH) cooker, and a water heater, and includes a communication interface 20, a main unit 21, a security chip 22, an auxiliary storage device 23, and a control circuit 24, as illustrated in FIG. 2.

The communication interface 20 is hardware for communicatively and electrically connecting to the communication adaptor 3. In the present embodiment, the communication interface 20 is a serial interface, and communication between the apparatus 2 and the communication adaptor 3 is performed in accordance with a standardized serial communication protocol such as UART.

The main unit 21 is a component for achievement of fundamental functions of the apparatus 2. For example, in the case in which the apparatus 2 is an air conditioner, more specifically, an indoor unit, the main unit 21 includes a fan, a heat exchanger, a temperature sensor, and the like. In the case in which the apparatus 2 is lightning equipment, the main unit 21 includes an LED.

The security chip 22 is, although described later in detail, an integrated circuit for storage of (i) a key that is hereinafter called the first key and is a key for decoding function-authentication information received from the communication adaptor 3 and (ii) a common key that is hereinafter called the second key and is used for encryption and decoding of data included in a communication frame that is transmitted to and received from the communication adaptor 3.

The auxiliary storage device 23 is an example of storage means and includes a readable/rewritable nonvolatile semiconductor memory such as an electrically erasable programmable read-only memory (EEPROM) and a flash memory, a hard disk drive (HDD), or the like. The auxiliary storage device 23 stores a program for communication with the communication adaptor 3 that is hereinafter called the communication program, a program for control of operation of the main unit 21, and data for use in execution of these programs.

The control circuit 24 includes a non-illustrated central processing unit (CPU), a non-illustrated read only memory (ROM), a non-illustrated random access memory (RAM), and the like, and performs overall control of the apparatus 2. Functions of the apparatus 2 that are achieved by the control circuit 24 are described later in detail.

The communication adaptor 3 is an apparatus for communicatively connecting the network apparatus 5 to a network N that is, for example, an open network such as the Internet, Wi-Fi^{®}, and Modbus^{®}, or a closed network such as an air-conditioning network and a lighting network.

The communication adaptor 3 includes a first communication interface 30, a second communication interface 31, a security chip 32, an auxiliary storage device 33, and a control circuit 34, as illustrated in FIG. 2. The first communication interface 30 is hardware for communicatively and electrically connecting to the apparatus 2. In the present embodiment, the first communication interface 30 is a serial interface, and the communication between the communication adaptor 3 and the apparatus 2 is performed in accordance with a standardized serial communication protocol such as UART, as described above.

The second communication interface 31 is hardware that is connectable to the network N to communicate with the control device 4. The control device 4 is a computing apparatus that controls the apparatus 2, and is (i) a controller included in a home energy management system (HEMS) arranged in an appropriate location in the house or (ii) a cloud server connected to the Internet.

The security chip 32 is an integrated circuit for storage of the function-authentication information that is described later in detail and the aforementioned second key.

The auxiliary storage device 33 includes a readable/rewritable nonvolatile semiconductor memory such as an EEPROM and a flash memory. The auxiliary storage device 33 stores a program for communication with the control device 4, a program for communication with the apparatus 2, and data for use in execution of these programs.

The control circuit 34 includes a non-illustrated CPU, a non-illustrated ROM, a non-illustrated RAM, and the like, and performs overall control of the communication adaptor 3.

Next, functions of the communication adaptor 3 are described in detail. As illustrated in FIG. 3, the communication adaptor 3 includes a function-authentication information transmitter 300 and a command transmitter 301 as characteristic functions of the present disclosure. These functional elements are achieved by execution, by the CPU of the control circuit 34, of the aforementioned programs stored in the auxiliary storage device 33.

The function-authentication information transmitter 300 is an example of function-authentication information transmission means. The function-authentication information transmitter 300 transmits the function-authentication information stored in the security chip 32 to the apparatus 2. More specifically, upon completion of negotiation for exchanging a transmission speed, a version, and the like with the apparatus 2 after startup of the communication adaptor 3, the function-authentication information transmitter 300 reads out the function-authentication information and the second key from the security chip 32 and generates data by encrypting the function-authentication information with the second key. This encryption is performed by using, for example, the advanced encryption standard (AES) 128-CTR method. The function-authentication information transmitter 300 transmits to the apparatus 2 a communication frame including the generated data.

Hereinafter, the function-authentication information is described in detail using a specific example. In this example, the apparatus 2 is taken to be an air conditioner, a manufacturer of the apparatus 2 is taken to be company A, and a manufacturer of the communication adaptor 3 is taken to be company B that is a third party.

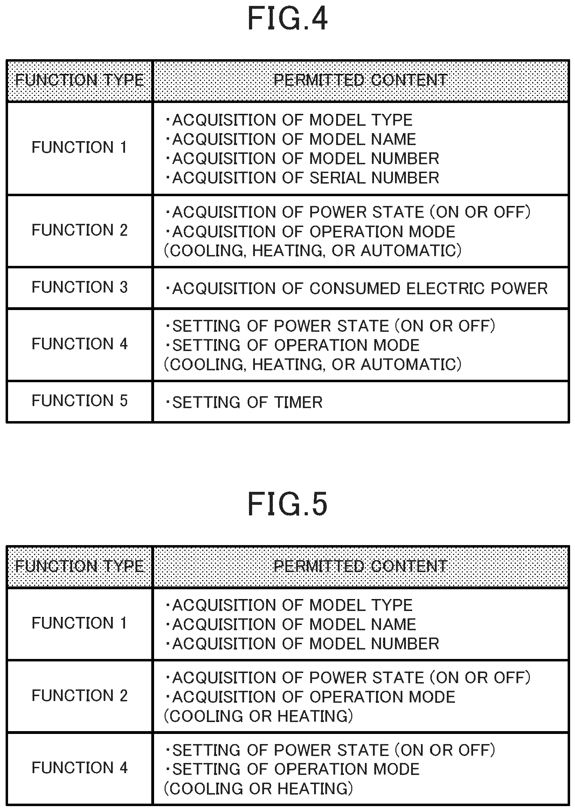

The functions illustrated in FIG. 4 are executable with respect to apparatus 2 by a genuine communication adaptor of the company A. On the other hand, the company A discloses to the company B, and permits the company B to use, a part of function types illustrated in FIG. 4 and a part of content of the part of the function the types. FIG. 5 illustrates the function types and the content thereof that are permitted for the company B. As can be understood from FIG. 5, the function 3 and the function 5 are not permitted for the company B.

Additionally, as the function 1, acquisition of a serial number is not permitted for the company B, although acquisition of a model type, a model name, and a model number, is permitted. Further, as the function 2, acquisition of an operation mode indicating "automatic" is not permitted for the company B, although acquisition of a power state indicating "on" or "off" and acquisition of an operation mode indicating "cooling" or "heating" are permitted. Moreover, as the function 4, setting the operation mode to "automatic" is not permitted for the company B, although setting the power state to "on" or "off and setting the operation mode to "cooling" or "heating" are permitted.

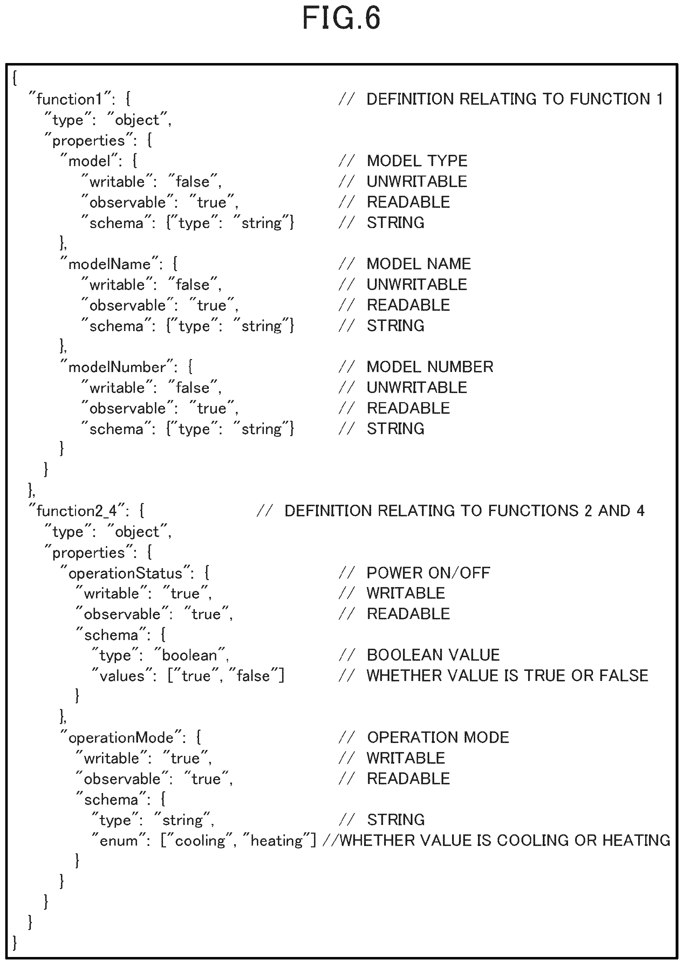

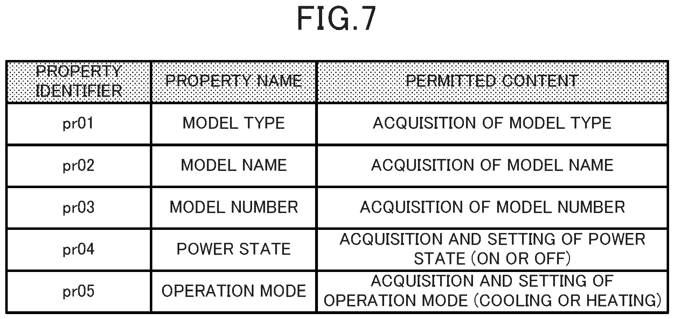

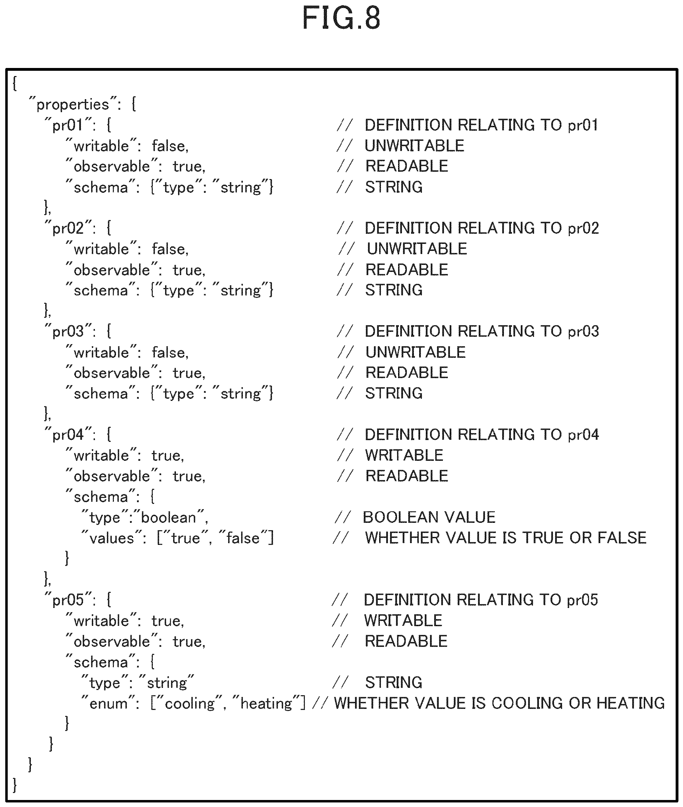

The company A converts, into data, the content illustrated in FIG. 5, that is, information relating to functions permitted for the company B to use. For example, the company A converts, into data, the content illustrated in FIG. 5 in the JavaScript Object Notation (JSON) format, as illustrated in FIG. 6. Since a function of a home appliance is generally representable by a combination of a property and a value as illustrated in FIG. 7, the company A may generate data that describes for each property whether acquisition relating to the property is executable and whether setting relating to the property is executable, as illustrated in FIG. 8.

The company A generates the function-authentication information by encrypting, by a predetermined encryption method such as AES, the data generated as described above. A key used for this encryption is not disclosed to the company B, and the company A writes this key in the security chip 22 as the first key at the time of manufacturing of the apparatus 2.

The company A provides the generated function-authentication information to the company B. The information relating to functions permitted for the company B to use is separately provided to the company B in writing or the like. The company B writes the function-authentication information provided by the company A in the security chip 32 at the time of manufacturing of the communication adaptor 3.

Again with reference to FIG. 3, the command transmitter 301 transfers to the apparatus 2 a command for control of the apparatus 2 that is received from the control device 4. More specifically, the command transmitter 301 generates data by encrypting the command with the second key read out from the security chip 32, and transmits to the apparatus 2 the communication frame including the generated data.

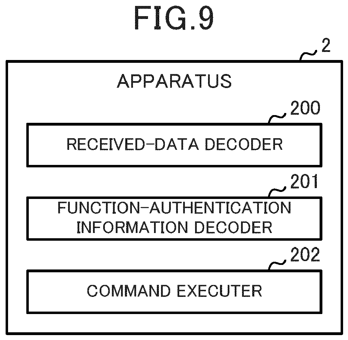

Next, the functions of the apparatus 2 are described in detail. As illustrated in FIG. 9, the apparatus 2 includes a received-data decoder 200, a function-authentication information decoder 201, and a command executer 202, as characteristic functions of the present disclosure. These functional elements are achieved by execution, by the CPU of the control circuit 24, of the aforementioned communication program stored in the auxiliary storage device 23.

The received-data decoder 200 decodes, with the second key read out from the security chip 22, the data included in the communication frame received from the communication adaptor 3. The received-data decoder 200 determines whether the decoded data is the function-authentication information or the command. In the case in which the decoded data is the function-authentication information, the received-data decoder 200 supplies the function-authentication information to the function-authentication information decoder 201. Conversely, in the case in which the decoded data is the command, the received-data decoder 200 supplies the command to the command executer 202.

The function-authentication information decoder 201 is an example of decoding means. The function-authentication information decoder 201 decodes, with the first key read out from the security chip 22, the function-authentication information supplied from the received-data decoder 200. The function-authentication information decoder 201 saves the decoded function-authentication information in the auxiliary storage device 23. In the case of a failure to decode the function-authentication information, the control circuit 24 deems the communication adaptor 3 to be an unauthorized adaptor, and thereafter, stops communication with the communication adaptor 3.

The command executer 202 is an example of command execution means. The command executer 202 determines, based on the decoded function-authentication information saved in the auxiliary storage device 23, whether a function corresponding to the command supplied from the received-data decoder 200, more specifically, a function type or a property identifier corresponding to the command, is permitted. For example, in the case in which the command corresponds to the function 1, the function 2, or the function 4, the command executer 202 determines that the function corresponding to the command is permitted.

Conversely, in the case in which the command corresponds to the function 3 or the function 5, the command executer 202 determines that the function corresponding to the command is not permitted. In this case, the command executer 202 discards the command without executing processing according to the command.

The command executer 202 executes processing according to the command only when determining that the function corresponding to the command is permitted. More specifically, the command executer 202 refers to the decoded function-authentication information and executes processing based on only content permitted for the function.

For example, in the case in which the command corresponds to the function 1, the command executer 202 acquires a model type, a model name, and a model number of the apparatus 2 from a non-illustrated apparatus information table stored in the auxiliary storage device 23 and transmits, to the communication adaptor 3, response data including the acquired model type, model name, and model number.

In the case in which the command corresponds to the function 2, the command executer 202 transmits, to the communication adaptor 3, response data including the power state of the apparatus 2 indicating "on" or "off" and the operation mode of the apparatus 2 indicating "cooling" or "heating". In the case in which a current operation mode is "automatic", the command executer 202 transmits, to the communication adaptor 3, response data including only the power state of the apparatus 2 indicating "on" or "off".

In the case in which the command corresponds to the function 4 and indicates setting the power state to "on" and setting to "cooling", the command executer 202 sets the power state of the apparatus 2 to "on" and sets the operation mode to "cooling". The command executer 202 transmits, to the communication adaptor 3, response data indicating completion of setting. Further, in the case in which the command corresponds to the function 4 and indicates setting the power state to "on" and setting to "automatic", the command executer 202 sets the power state of the apparatus 2 to "on" but does not set the operation mode to "automatic" since setting to "automatic" is not permitted.

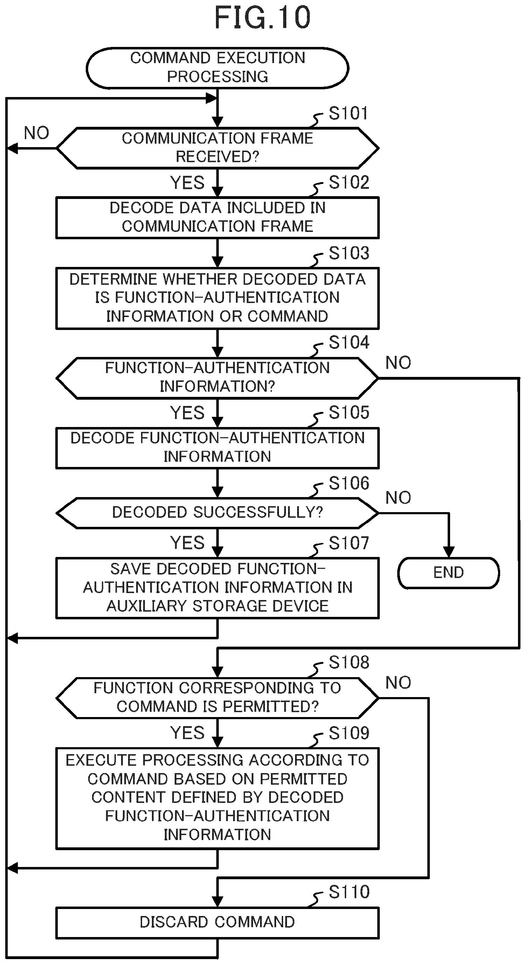

FIG. 10 is a flowchart illustrating a process for command execution processing executed by the apparatus 2. The apparatus 2 starts the command execution processing upon completion of the negotiation with the communication adaptor 3 connected thereto.

Upon receiving the communication frame from the communication adaptor 3 (YES in step S101), the apparatus 2 decodes the data included in the received communication frame with the second key (step S102). The apparatus 2 determines whether the decoded data is the function-authentication information or the command (step S103).

When the decoded data is the function-authentication information (YES in step S104), the apparatus 2 decodes the function-authentication information with the first key (step S105). When the function-authentication information is decoded successfully (YES in step S106), the apparatus 2 saves the decoded function-authentication information in the auxiliary storage device 23 (step S107). Conversely, when decoding of the function-authentication information fails (NO in step S106), the apparatus 2 ends the command execution processing. This stops communication between the apparatus 2 and the communication adaptor 3 thereafter.

When the decoded data is the command (NO in step S104), the apparatus 2 refers to the decoded function-authentication information saved in the auxiliary storage device 23 and determines whether a function corresponding to the command is permitted (step S108). When the function corresponding to the command is permitted (YES in step S108), the apparatus 2 executes processing according to the command based on permitted content indicated by the decoded function-authentication information (step S109). Thereafter, the processing by the apparatus 2 shifts to step S101.

When the function corresponding the command is not permitted (NO in step S108), the apparatus 2 discards the command without executing processing according to the command (step S110). Thereafter, the processing by the apparatus 2 shifts to step S101.

As described above, according to the network apparatus 5 in the apparatus control system 1 according to Embodiment 1, the communication adaptor 3 retains the function-authentication information that is provided in advance by the manufacturer of the apparatus 2 and is generated by encrypting data describing information relating to functions for which use is permitted. The communication adaptor 3 transmits the function-authentication information to the apparatus 2 at the time of connection to the apparatus 2, and the apparatus 2 decodes the function-authentication information received from the communication adaptor 3 and retains the decoded function-authentication information. Thereafter, upon receiving a command from the communication adaptor 3, the apparatus 2 determines, based on the retained function-authentication information, whether a function corresponding to the command is permitted. The apparatus 2 executes processing according to the command based on permitted content indicated by the retained function-authentication information only when the function corresponding to the command is permitted.

This prevents the communication adaptor 3 from using a disallowed function with respect to the apparatus 2, and even in the case of a permitted function, prevents the use of disallowed content. Thus, unauthorized use of the apparatus 2 by the communication adaptor 3 can be prevented.

### Embodiment 2

Next, Embodiment 2 of the present disclosure is described. In the explanation below, structural elements or the like that are common with Embodiment 1 are assigned the same reference sign, and explanation for such elements is omitted.

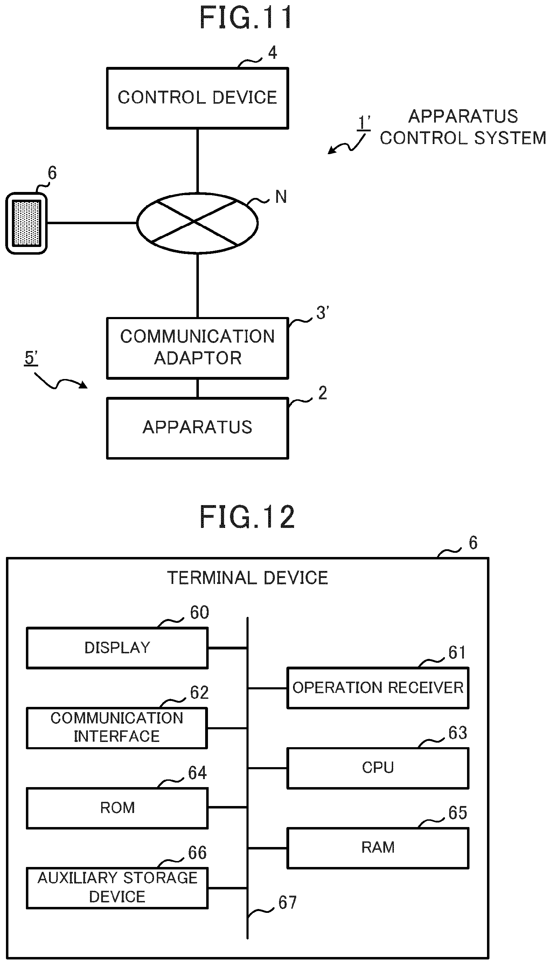

FIG. 11 illustrates overall configuration of an apparatus control system 1' according to Embodiment 2. The apparatus control system 1' is, for example, a system for controlling the apparatus 2 arranged in a housing such as a detached house, an apartment house, or the like and includes the apparatus 2, a communication adaptor 3', a control device 4, and a terminal device 6. The apparatus 2 and the communication adaptor 3' are included in a network apparatus 5'.

Hardware configuration and functional configuration of the apparatus 2 according to the present embodiment are similar to those of the apparatus 2 in Embodiment 1 (refer to FIGS. 2 and 9).

The communication adaptor 3' is an apparatus for communicatively connecting the network apparatus 5' to the network N that is, for example, an open network such as the Internet, Wi-Fi^{®}, and Modbus^{®}, or a closed network such as an air-conditioning network and a lighting network.

Although hardware configuration of the communication adaptor 3' is similar to that of the communication adaptor 3 in Embodiment 1 (refer to FIG. 2), the function-authentication information provided by the manufacturer of the apparatus 2 is not written in the security chip 32 of the communication adaptor 3'. In the present embodiment, the communication adaptor 3' acquires the function-authentication information by communication with the terminal device 6 after connection with the apparatus 2 is established, and saves the acquired function-authentication information in the auxiliary storage device 33.

The terminal device 6 is a portable electronic device, such as a smartphone and tablet terminal, that is carried by a user such as a resident of the house and a construction company of the apparatus control system 1'. As illustrated in FIG. 12, the terminal device 6 includes a display 60, an operation receiver 61, a communication interface 62, a CPU63, a ROM 64, a RAM 65, and an auxiliary storage device 66. These structural elements are connected to one another via a bus 67.

The display 60 includes a display device such as a liquid crystal display and an organic EL display. The display 60 displays, under control by the CPU 63, various screens or the like according to operations by the user.

The operation receiver 61 includes one or more input devices, such as a push-button, a touch panel, and a touch pad, receives an input operation from the user, and sends to the CPU 63 a signal according to the received operation.

The communication interface 62 at least includes hardware connectable to the network N to communicate with the communication adaptor 3'.

The CPU 63 performs overall control of the terminal device 6. Functions of the terminal device 6 that are achieved by the CPU 63 are described later in detail. The ROM 64 stores multiple types of firmware and data for use in execution of the multiple types of firmware. The RAM 65 is used by the CPU 63 as a work area.

The auxiliary storage device 66 includes a readable/rewritable nonvolatile semiconductor memory such as an EEPROM and a flash memory. The auxiliary storage device 66 stores (i) various programs including an application program that is hereinafter called the function-authentication information setting application and that sets the function-authentication information to the communication adaptor 3' and (ii) data for use in execution of these programs. The function-authentication information setting application is downloadable via the Internet onto the terminal device 6 from, for example, a non-illustrated server operated by the manufacturer, a vendor, or the like of the apparatus 2.

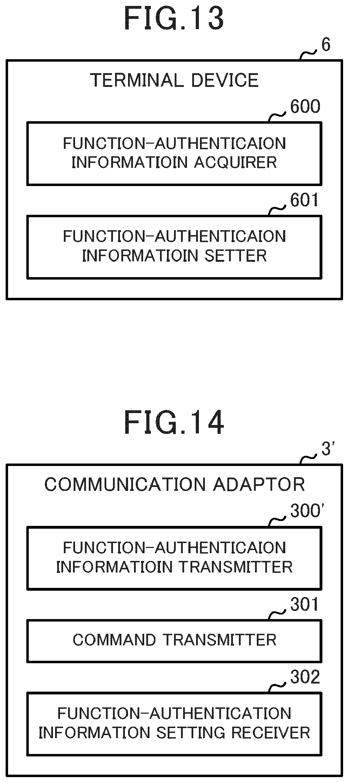

As illustrated in FIG. 13, the terminal device 6 includes a function-authentication information acquirer 600 and a function-authentication information setter 601 as characteristic functions of the present disclosure. These functional elements are achieved by execution, by the CPU 63 in response to an operation by the user, of the aforementioned function-authentication information setting application stored in the auxiliary storage device 66.

The function-authentication information acquirer 600 acquires, from a non-illustrated external device, function-authentication information that is generated by the manufacturer of the apparatus 2 and that is similar to that of Embodiment 1. The function-authentication information acquirer 600 acquires the function-authentication information from the external device by, for example, communication via the Internet. The external device in this case is, for example, a server operated by the manufacturer, the vendor, or the like of the apparatus 2.

The function-authentication information acquirer 600 may acquire the function-authentication information from the external device connected thereto via a non-illustrated external input interface included in the terminal device 6. The external device in this case is, for example, an SD memory card, a universal serial bus (USB) memory, or the like.

Upon acquisition of the function-authentication information by the function-authentication information acquirer 600, the function-authentication information setter 601 communicates with the communication adaptor 3' via the network N to request the communication adaptor 3' to set the function-authentication information.

Next, functions of the communication adaptor 3' are described in detail. As illustrated in FIG. 14, the communication adaptor 3' includes a function-authentication information transmitter 300', a command transmitter 301, and a function-authentication information setting receiver 302, as characteristic functions of the present disclosure. These functional elements are achieved by execution, by the CPU of the control circuit 34 of the communication adaptor 3', of a program for communication with the control device 4, a program for communication with the apparatus 2, and a program for communication with the terminal device 6 that are stored in the auxiliary storage device 33.

The function-authentication information setting receiver 302 is an example of function-authentication information setting receiving means. The function-authentication information setting receiver 302 receives a setting of the function-authentication information from the terminal device 6. More specifically, upon receiving the aforementioned request from the terminal device 6 via the network N, the function-authentication information setting receiver 302 receives the function-authentication information transmitted from the terminal device 6 and saves the received function-authentication information in the auxiliary storage device 33.

The function-authentication information transmitter 300' transmits to the apparatus 2 the function-authentication information saved in the auxiliary storage device 33. More specifically, upon the function-authentication information setting receiver 302 newly receiving setting of the function-authentication information or upon completion of negotiation for exchanging a transmission speed, a version, and the like with the apparatus 2 after startup of the communication adaptor 3' in a state in which the function-authentication information is already saved in the auxiliary storage device 33, the function-authentication information transmitter 300' reads out the function-authentication information from the auxiliary storage device 33 and reads out the second key from the security chip 32. The function-authentication information transmitter 300' generates data by encrypting the function-authentication information with the second key and transmits a communication frame including the generated data to the apparatus 2.

The command transmitter 301 of the communication adaptor 3' executes processing similar to that of the command transmitter 301 of the communication adaptor 3 in Embodiment 1.

As described above, according to the network apparatus 5' in the apparatus control system 1' according to Embodiment 2, the communication adaptor 3' retains the function-authentication information that is provided in advance by the manufacturer of the apparatus 2 and is generated by encrypting data describing information relating to functions for which use is permitted. The communication adaptor 3 transmits the function-authentication information to the apparatus 2 as appropriate, and the apparatus 2 decodes the function-authentication information received from the communication adaptor 3' and retains the decoded function-authentication information. Thereafter, upon receiving a command from the communication adaptor 3', the apparatus 2 determines, based on the retained function-authentication information, whether a function corresponding to the command is permitted. The apparatus 2 executes processing according to the command based on permitted content indicated by the retained function-authentication information only when the function corresponding to the command is permitted.

This prevents the communication adaptor 3' from using a disallowed function with respect to the apparatus 2, and even in the case of a permitted function, prevents the use of disallowed content. Thus, unauthorized use of the apparatus 2 by the communication adaptor 3' can be prevented.

Furthermore, since the terminal device 6 sets the function-authentication information to the communication adaptor 3', specifying an apparatus as a connection target at the time of manufacturing of the communication adaptor 3' is unnecessary. This allows various apparatuses to be the connection target even after the manufacturing of the communication adaptor 3'.

Furthermore, since the function-authentication information is updatable as appropriate, the communication adaptor 3' can retain up-to-date function-authentication information.

The present disclosure is not limited to the aforementioned embodiments, and various modifications and applications are of course possible without departing from the gist of the present disclosure.

For example, the communication adaptors 3 and 3' may acquire the second key from the apparatus 2 at the time of connection to the apparatus 2.

Furthermore, the terminal device 6 in Embodiment 2 may be configured to communicate with the communication adaptor 3' by another communication method different from the communication method in the network N, for example, by a communication method of a wireless Personal Area Network (PAN) or the like. In this case, the communication adaptor 3' includes, other than the elements described above, a third communication interface that is compatible with the other communication method.

Furthermore, the communication adaptor 3' in Embodiment 2 may communicate via the Internet with a server operated by the manufacturer, sales company, or the like of the communication adaptor 3' or the apparatus 2, acquire the function-authentication information from the server, and retain the function-authentication information.

Furthermore, functional elements of the apparatus 2 as illustrated in FIG. 9 may be achieved wholly or partially by dedicated hardware, and functional elements of the communication adaptors 3 and 3' as illustrated in FIGS. 3 and 14 may be achieved wholly or partially by dedicated hardware. The dedicated hardware is, for example, a single circuit, a composite circuit, a programmed processor, an application specific integrated circuit (ASIC), a field-programmable gate array (FPGA), or a combination thereof.

Furthermore, the communication program executed by the apparatus 2, the programs executed by the communication adaptors 3 and 3', and the function-authentication information setting application executed by the terminal device 6 can be distributed by storage in a computer-readable recording medium, such as a compact disc read only memory (CD-ROM), a digital versatile disc (DVD), a magneto-optical disc, a USB memory, a memory card, and an HDD.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure can be suitably used for an apparatus such as a home appliance connectable to a network via a communication adaptor.

### Reference Signs List

- 1,1': Apparatus control system
- 2: Apparatus
- 3, 3': Communication adaptor
- 4: Control device
- 5, 5': Network apparatus
- 6: Terminal device
- 20: Communication interface
- 21: Main unit
- 22, 32: Security chip
- 23, 33: Auxiliary storage device
- 24, 34: Control circuit
- 30: First communication interface
- 31: Second communication interface
- 200: Received-data decoder
- 201: Function-authentication information decoder
- 202: Command executer
- 300, 300': Function-authentication information transmitter
- 301: Command transmitter
- 302: Function-authentication information setting receiver
- 600: Function-authentication information acquirer
- 601: Function-authentication information setter

## Claims

1. An apparatus comprising:
decoding means for decoding function-authentication information received from a communication adaptor connected via a serial interface, the function-authentication information being information encrypted before being retained by the communication adaptor;
storage means for storing the decoded function-authentication information; and
command execution means for (i) upon receiving a command from the communication adaptor, determining, based on the function-authentication information stored in the storage means, whether a function corresponding to the command is permitted, and (ii) executing processing according to the command only when the function is permitted.

2. The apparatus according to claim 1, wherein
in the function-authentication information stored in the storage means, for each of one or more permitted functions, content permitted for the function is described, and
the command execution means executes the processing according to the command based on the content permitted for the function corresponding to the command.

3. A network apparatus comprising:
a communication adaptor; and
an apparatus connectable to the communication adaptor via a serial interface,
the communication adaptor comprising function-authentication information transmission means for transmitting, to the apparatus, function-authentication information that is information encrypted before being retained by the communication adaptor,
the apparatus comprising
decoding means for decoding the function-authentication information received from the communication adaptor,
storage means for storing the decoded function-authentication information, and
command execution means for (i) upon receiving a command from the communication adaptor, determining, based on the function-authentication information stored in the storage means, whether a function corresponding to the command is permitted, and (ii) executing processing according to the command only when the function is permitted.

4. The network apparatus according to claim 3, wherein the communication adaptor further comprises an integrated circuit storing the function-authentication information.

5. The network apparatus according to claim 3 or 4, wherein the communication adaptor further comprises function-authentication information setting receiving means for receiving a setting of the function-authentication information from a terminal device.

6. The network apparatus according to any one of claims 3 to 5, wherein for the apparatus,
in the function-authentication information stored in the storage means, for each of one or more permitted functions, content permitted for the function is described, and
the command execution means executes the processing according to the command based on the content permitted for the function corresponding to the command.

7. A command execution method comprising:
decoding function-authentication information received from a communication adaptor connected via a serial interface, the function-authentication information being information encrypted before being retained by the communication adaptor,
saving the decoded function-authentication information in storage means,
upon receiving a command from the communication adaptor, determining, based on the function-authentication information saved in the storage means, whether a function corresponding to the command is permitted, and
executing processing according to the command only when the function is permitted.
